# FASCICULE DE BREVET EUROPEEN

(11) **EP 0 448 416 B1**
(45) Date de publication et mention de la délivrance du brevet: **29.12.1993**
(21) Numéro de dépôt: 91400269.6
(22) Date de dépôt: 05.02.1991
(51) Int. Cl.: G01W 1/14

(54) **Pluviomètre à dispositif de détection de colmatage**
Regenmesser mit Vorrichtung zur Detektierung von Verstopfungen
Rain gauge with a device for blockage detection

(30) Priorité: 08.02.1990 FR 9001470
(43) Date de publication de la demande: 25.09.1991
(73) Titulaire: FRANCE TELECOM, 75015 Paris (FR)
(72) Inventeur: Delahaye, Jean Yves, F-92170 Vanves (FR)
(74) Mandataire: Fort, Jacques

(56) Documents cités:
- DE-A- 3 716 049
- PATENT ABSTRACTS OF JAPAN, vol. 9, no. 221 (P-386), 7 septembre 1985; & JP-A-60 080 741 (SANYO) 08-05-1985
- PATENT ABSTRACTS OF JAPAN, vol. 9, no. 221 (P-386), 7 septembre 1985; & JP-A-60 080 740 (SANYO) 08-05-1985

## Description

L'invention concerne les pluviomètres du type comportant un entonnoir de réception muni, à sa partie inférieure, d'un ajutage de déversement d'eau à l'entrée duquel est disposé un filtre.

Les pluviomètres utilisés de façon quasi universelle par les services météorologiques sont du type ci-dessus défini. L'ajutage de leur entonnoir fixe de réception est placé au-dessus d'un auget basculant sur une lame d'appui, à deux compartiments symétriques recevant alternativement l'eau s'écoulant par l'ajutage. L'auget bascule autour de l'arête horizontale de la lame lorsque la quantité d'eau contenue dans un compartiment atteint une valeur déterminée. Ce compartiment déverse alors son contenu à l'extérieur et l'autre compartiment commence à recevoir l'eau qui s'écoule de l'entonnoir. Un interrupteur, constitué en général par une ampoule à contacts au mercure solidaire de l'auget, indique, par son état ouvert ou fermé, la position dans laquelle se trouve l'auget. A partir de la connaissance de la section droite de l'entrée de l'entonnoir et de la quantité d'eau qui provoque le basculement de l'auget, on peut déterminer, en comptant le nombre des fonctionnements de l'interrupteur, l'importance des précipitations et, en repérant les instants de basculement par rapport aux données fournies par une horloge, leur répartition dans le temps.

Beaucoup de pluviomètres équipent des stations isolées et ne sont inspectés qu'à intervalles de temps éloignés. Entre deux inspections, le filtre, destiné à retenir les impuretés en laissant passer l'eau de pluie ou l'eau de fonte de la neige, peut être progressivement colmaté par des débris tels que feuilles, poussières et insectes. Ce colmatage progressif n'est pas décelé jusqu'à la première inspection qui lui succède. Il est en conséquence impossible de savoir depuis quand le filtre est colmaté et de déterminer depuis combien de temps les données enregistrées sont douteuses.

L'invention vise notamment à fournir un pluviomètre comportant un détecteur permettant de déceler l'obstruction du filtre, avant même qu'elle ne soit complète, afin de la localiser dans le temps ou d'émettre une alarme ; elle vise également à atteindre ce résultat sans gêner la collecte d'eau par l'entonnoir ou son écoulement et à limiter les perturbations du dispositif de détection au cours des précipitations.

Dans ce but l'invention propose notamment un pluviomètre du type ci-dessus défini, caractérisé en ce qu'il comprend : un dispositif de détection de colmatage du filtre, ayant une source de lumière disposée à l'entrée de l'entonnoir, placée de façon à éclairer le fond de l'entonnoir au-dessus du filtre, un capteur de la lumière qui est réfléchie et diffusée par le fond de l'entonnoir et qui a traversé le filtre et l'ajutage, ledit capteur étant placé au-dessous de l'ajutage et décalé latéralement par rapport à celui-ci ; et un boîtier électronique relié à la source pour provoquer l'émission par cette dernière d'impulsions lumineuses à intervalles de temps réguliers et pour détecter les signaux de sortie du capteur dépassant un seuil prédéterminé.

Grace à cette disposition, le dispositif de détection ne gêne pas la collecte et l'écoulement de l'eau ; le capteur n'est pas directement aspergé par l'eau qui s'écoule par l'ajutage. Contrairement à ce que l'on pouvait craindre, la quantité de lumière reçue par le capteur à travers le filtre et l'entonnoir, lorsque le filtre n'est pas colmaté, est suffisante pour permettre un fonctionnement fiable du capteur en dépit des pertes dues à la réflexion et à la diffusion.

La fiabilité du dispositif de détection de colmatage peut encore être accrue en comparant le rapport entre le nombre de signaux de sortie du capteur dépassant un seuil et le nombre total d'impulsions lumineuses émises au cours d'une durée déterminée, une heure par exemple, et en admettant l'absence de colmatage lorsque ce rapport dépasse une valeur prédéterminée, inférieure à l'unité et qui peut être déterminée expérimentalement. L'utilisation d'un tel critère écarte dans une large mesure l'influence des réflexions totales quelquefois observées lorsque l'eau de pluie ruisselle le long de la paroi de l'entonnoir et réduit l'intensité lumineuse qui atteint le capteur à une valeur inférieure au seuil. La pratique a montré qu'en général ce phénomène de réflexion totale n'intervient pas dans plus de 70 % des cas, c'est-à-dire sur plus de 70 % du temps.

La surveillance de bon fonctionnement que donne la mise en oeuvre de l'invention sur le pluviomètre permet d'espacer et souvent de supprimer les inspections périodiques et de les remplacer par des vérifications sur place effectuées uniquement en cas d'émission d'une alarme. Tous les avantages qui en découlent sont atteints si le pluviomètre peut fonctionner de façon autonome, sans alimentation électrique extérieure, pendant une durée très longue, pratiquement de l'ordre de l'année. Pour permettre un fonctionnement autonome à partir d'une source constituée par une pile du commerce, par exemple une pile alcaline de 4,5 V, la consommation électrique du boîtier électronique doit être réduite. Ce résultat est atteint en utilisant un boîtier électronique autonome incorporant : une alimentation électrique locale ; des moyens provoquant l'émission, par la source, d'impulsions lumineuses à intervalles de temps déterminés par une base de temps ; un récepteur relié au capteur et comportant un amplificateur et des moyens détecteurs à seuil fournissant un signal de sortie lorsque l'énergie reçue par le capteur dépasse le seuil ; et des moyens alimentant le récepteur à partir de la source uniquement pendant des intervalles de temps déterminés, correspondant aux durées d'émissions lumineuses par la source.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma synoptique montrant les éléments de collecte d'eau d'un pluviomètre et les composants essentiels du dispositif de détection de colmatage qui l'équipe ;
- les figures 2 et 3 sont des chronogrammes indiquant l'allure des signaux qui apparaissent aux points indiqués par des lettres sur le synoptique de la figure 1 ;
- les figures 4, 5 et 6 sont des schémas synoptiques montrant une constitution possible de la base de temps, du circuit récepteur et du générateur du dispositif de la figure 1.

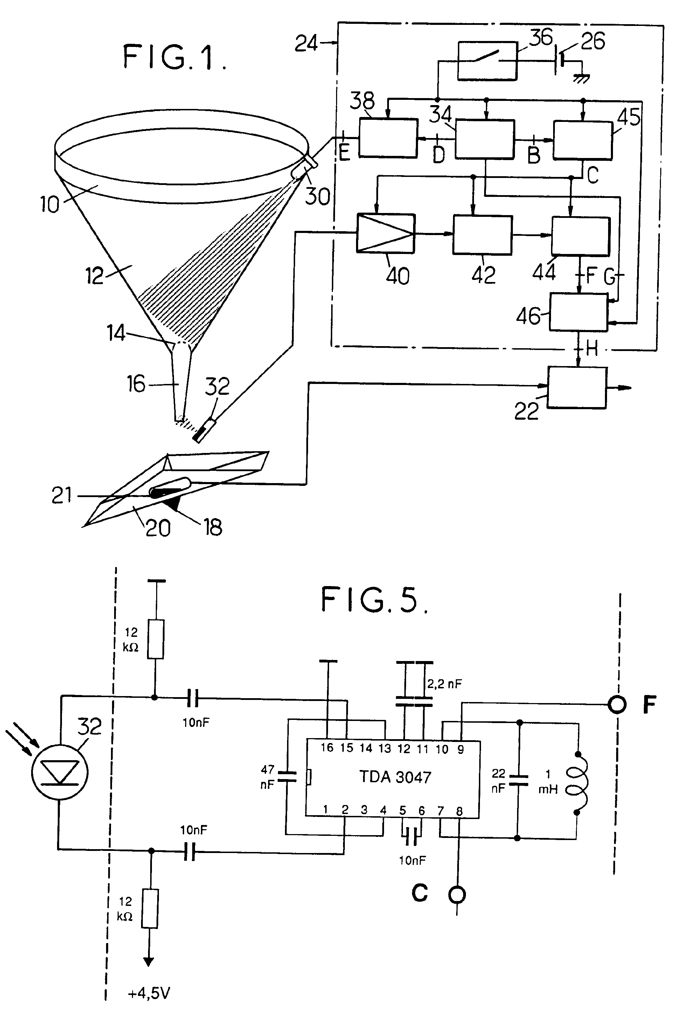

Le pluviomètre montré schématiquement en figure 1 a une constitution générale connue. Il est du type à auget basculant utilisé de façon quasi universelle à l'heure actuelle. Il comporte un entonnoir fixe de collecte, à axe vertical, ayant à sa partie haute une bague réceptrice 10 à bords tranchants et un cône 12 muni à sa partie inférieure d'un filtre métallique 14 à mailles fines (1 à 2 mm en général). L'entonnoir est souvent de révolution et sa bague a alors un diamètre de quelques dizaines de millimètres. Le cône se prolonge par un ajutage 16 qui s'ouvre au-dessus de l'arête 18 d'oscillation d'un auget basculant 20. Par basculement autour de l'arête horizontale 18, l'auget peut prendre soit la position dans laquelle il est montré en figure 1, soit une position symétrique par rapport à un plan vertical passant par l'arête. L'auget bascule lorsque la quantité d'eau reçue par le compartiment placé au-dessous de l'ajutage 16 a atteint une valeur déterminée. Le compartiment rempli déverse alors son contenu d'eau à l'extérieur et l'autre compartiment commence à recevoir l'eau s'écoulant de l'entonnoir. L'auget porte un interrupteur à basculement 21, généralement constitué par une ampoule à contacts au mercure, qui fournit une information sur la position de l'auget ou une impulsion à chaque basculement. Chaque basculement de l'auget intervient pour une hauteur de précipitation déterminée. Le comptage du nombre des basculements et leur localisation dans le temps, enregistrés par des moyens 22 de constitution connue ou transmis à un poste central de surveillance par des moyens de télécommunication, permettent de connaître la pluviométrie à la station.

Le pluviomètre montré en figure 1 est équipé d'un dispositif constituant un mode particulier de mise en oeuvre de l'invention. Ce dispositif comprend des moyens optiques de constitution telle que le colmatage du filtre constitue barrière optique et un boîtier électronique 24, muni d'une source d'énergie électrique propre, représentée par une pile 26. La seule liaison entre ce boîtier et l'extérieur est constituée par l'information de sortie qu'il fournit, constituée par une valeur binaire (0 ou 1).

Les éléments optiques du dispositif comprennent une source de lumière 30 disposée à l'entrée de l'entonnoir et un capteur 32 placé au-dessous de l'ajutage 16 et décalé latéralement par rapport à celui-ci, dans une position telle qu'il reçoit la lumière provenant de la source, réfléchie et diffusée par le fond de l'entonnoir, lorsque le filtre 14 n'est pas obturé.

La source 30 sera généralement une diode électroluminescente ou DEL à rendement élevé, prévue pour être attaquée par des impulsions de courant brèves et d'intensité élevée. On peut notamment utiliser une DEL CQY 90D vendue par de la société RTC, fournissant un rayonnement infra-rouge. Le capteur 32 peut alors être une photodiode adaptée au domaine d'émission de la DEL, telle qu'une photo-diode BPW 50 de la société RTC.

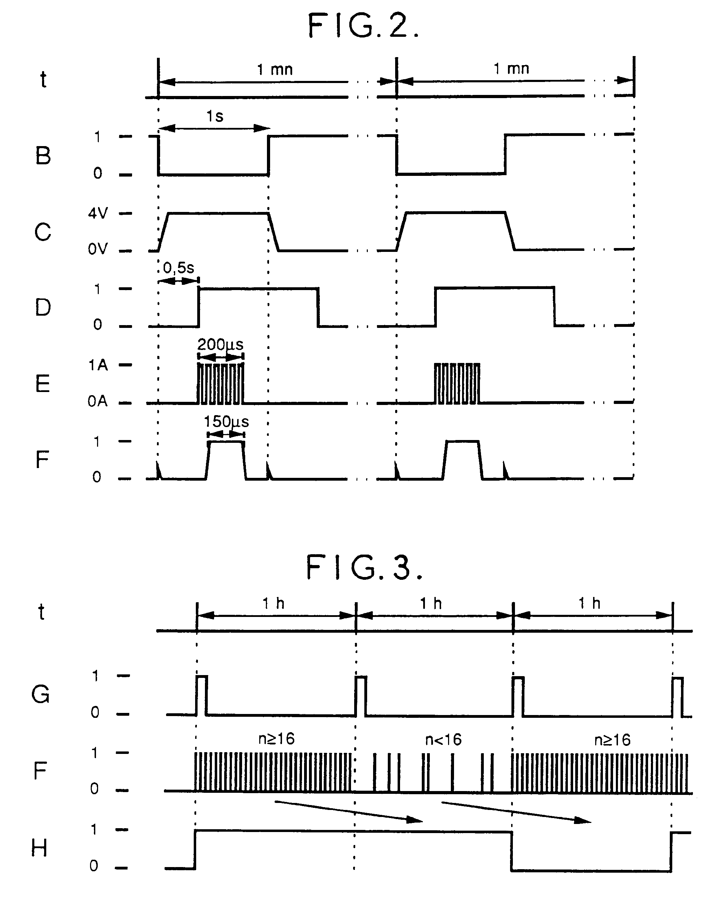

Le boîtier électronique 24 est en composants à faible consommation, de façon à avoir une autonomie de longue durée en utilisant comme source d'alimentation une pile alcaline du commerce de 4,5 Volts. Il comprend une base de temps 34 capable, lorsqu'elle est alimentée à partir de la source 26 par un interrupteur 36 à commande manuelle de fournir :
- sur une sortie B, des impulsions rectangulaires à une cadence relativement élevée (par exemple, comme illustré sur la figure 2, des impulsions d'une seconde au bout de chaque minute),
- sur une sortie D, des impulsions retardées par rapport aux impulsions précédentes (par exemple des impulsions d'une seconde, retardées de 0,5 seconde par rapport à celles qui apparaissent sur la sortie B),
- sur une sortie G, des impulsions rectangulaires, à cadence beaucoup plus faible que les impulsions apparaissant sur la sortie B (par exemple avec une période d'une heure).

L'intérêt de disposer d'impulsions apparaissant à la même cadence, mais avec un décalage dans le temps, sur les sorties B et D apparaîtra plus loin.

La sortie D de la base de temps 34 attaque l'entrée de déclenchement d'un générateur d'impulsions 38 qui, en réponse au front avant de l'impulsion de la base de temps, émet n impulsions brèves successives et identiques, dont chacune a une durée beaucoup plus faible (de plusieurs ordres de grandeur) que celle de l'impulsion apparaissant sur la sortie D. Dans la pratique, n sera compris entre 4 et 10. On peut notamment, comme illustré sur la figure 2, utiliser un générateur 38 fournissant six impulsions de 25 micro secondes chacune. Ces impulsions, apparaissant sur la sortie E du générateur, attaquent la source 30.

Le capteur 32 est relié à un circuit récepteur qui, dans le cas illustré sur la figure 1, comprend un amplificateur 40, un filtre passe-bande 42 et un détecteur synchrone 44.

Pour réduire la consommation du boîtier électronique, le circuit récepteur n'est pas alimenté en permanence. Ses entrées d'alimentation sont reliées à un circuit 45 d'alimentation régulé et commandé qui ne met sous tension le circuit récepteur que pendant la durée où il est susceptible de recevoir les impulsions provoquées par la sortie B de la base de temps. La durée qui sépare les fronts avant des impulsions apparaissant sur les sorties B et D de la base de temps est choisie suffisante pour que le circuit récepteur soit en état de fonctionner lorsqu'il reçoit les signaux fournis par le capteur 32 (figure 2).

Le détecteur synchrone 44 est prévu pour fournir, sur sa sortie F, un créneau de durée calibrée (150µs à mi-hauteur par exemple) lorsque le niveau moyen du signal reçu par le capteur dépasse, après filtrage et détection, un seuil prédéterminé.

La sortie F du circuit de réception attaque un circuit de comptage 46 à accumulation, prévu de façon à maintenir sur sa sortie H une tension indiquant l'absence de colmatage pendant toute la durée qui sépare deux impulsions successives apparaissant sur la sortie G, lorsque le nombre d'impulsions apparaissant sur la sortie F pendant l'intervalle de temps précédent a dépassé une fraction prédéterminée du nombre total d'impulsions attendues.

Dans le cas illustré sur la figure 3 par exemple, où le nombre maximum d'impulsions susceptibles d'apparaître sur la sortie F est de 60 au cours d'une heure, la tension de sortie du circuit de comptage et d'accumulation 46 est maintenue au niveau 1 chaque fois que 16 impulsions au moins ont été reçues au cours de l'heure précédente : cette condition n'est remplie que pour la première et la troisième période d'une heure.

Le choix d'un rapport minimum nettement inférieur à 1/2, tel que 16/60, permet de tenir compte du risque, en cas de pluie, de grêle ou de neige, d'un phénomène de réflexion totale due à la pluie qui ruisselle le long des bords du cône de réception ou d'une obturation temporaire.

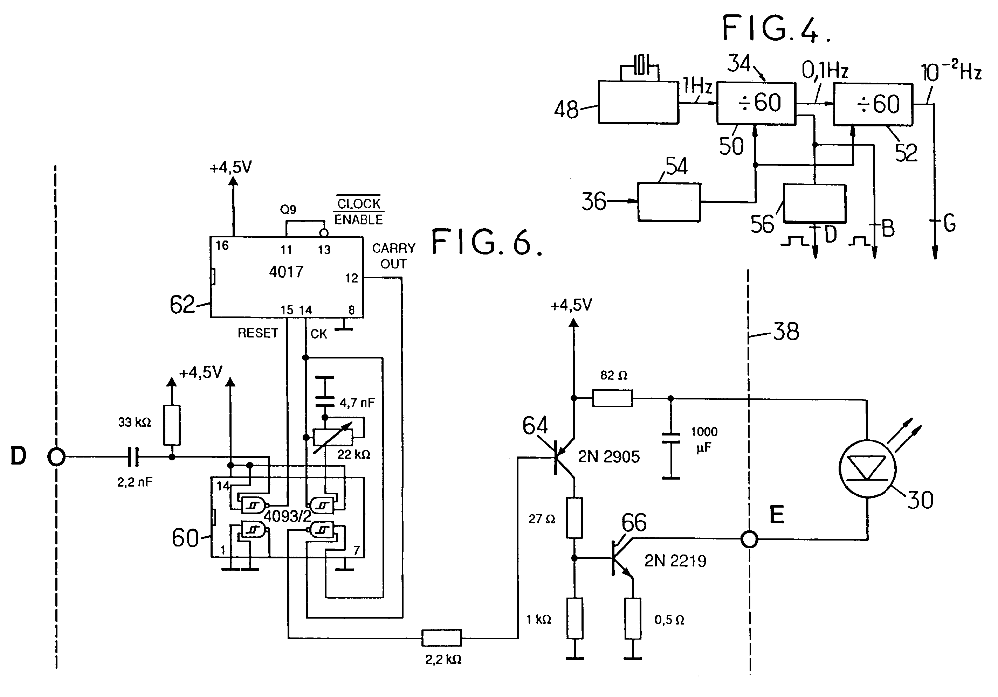

Les composants du circuit schématisé en figure 1 peuvent avoir la constitution montrée sur les figures 4 à 6.

En particulier, la base de temps 34 peut avoir la constitution montrée en figure 4 et comporter un oscillateur 48 à une fréquence de 1Hz, suivi de deux diviseurs 50 et 52 en cascade, fournissant respectivement des fréquences de 0,1 et 0,01 Hz. Un circuit d'initialisation 54 permet de remettre à zéro les compteurs à chaque mise sous tension du circuit par fermeture de l'interrupteur 36. Chacun des diviseurs comporte un monostable permettant d'obtenir un créneau de sortie d'une seconde au bout de chaque minute ou de chaque heure, sur les sorties B et G. Un retardateur 56 reçoit les impulsions à la cadence d'une minute et génère sur sa sortie D des impulsions d'une seconde, retardées de 0,5 seconde par rapport à celles fournies par le diviseur 50.

Les éléments constitutifs du circuit récepteur peuvent être regroupés en un seul circuit intégré. Dans le cas illustré sur la figure 6, ce récepteur comporte un circuit TDA 3047 constituant amplificateur, filtre et détecteur synchrone. Le signal de référence nécessaire pour la détection synchrone peut être fourni par la base de temps (non représentée) ou le générateur 38. La bande passante de filtrage est fixée par un circuit inductance-capacité accordé, par exemple à 38 KHz dans le cas envisagé plus haut.

Enfin, le générateur d'impulsions 38 peut avoir la constitution de principe montrée en figure 6, où les notations reset, CK, carry out et c̅l̅o̅c̅k̅ e̅n̅a̅b̅l̅e̅ désignent, de façon classique sur les circuits, l'entrée de remise à zéro, l'entrée d'horloge, la sortie de débordement et l'entrée de validation d'horloge. Le générateur, prévu pour fournir les impulsions à la fréquence de 38 KHz, comprend un jeu de quatre comparateurs à seuil 60 attaqués par la sortie D de la base de temps 34, un compteur à décades 62 et un amplificateur à deux transistors 64 et 66 montés en Darlington.

L'invention est susceptible de nombreuses variantes, notamment en ce qui concerne la constitution du boîtier électronique. Il doit être entendu que la portée du présent brevet ne s'étend pas aux seules dispositions qui ont été représentées, à titre de simples exemples.

## Revendications

1. Pluviomètre comportant un entonnoir de réception, muni, à sa partie inférieure, d'un ajutage (16) de déversement d'eau à l'entrée duquel est disposé un filtre (14), caractérisé en ce qu'il comprend un dispositif de détection de colmatage du filtre, ayant une source de lumière (30) disposée à l'entrée de l'entonnoir, placée de façon à éclairer le fond de l'entonnoir au-dessus du filtre (14), un capteur (32) de la lumière qui est réfléchie et diffusée par le fond de l'entonnoir et qui a traversé le filtre et l'ajutage, ledit capteur étant placé au-dessous de l'ajutage et décalé latéralement par rapport à celui-ci ; et un boîtier électronique (24) relié à la source (30) pour provoquer l'émission par cette dernière d'impulsions lumineuses à intervalles de temps réguliers et pour détecter les signaux de sortie du capteur (32) dépassant un seuil prédéterminé.

2. Pluviomètre selon la revendication 1, caractérisé en ce que le boîtier électronique (24) est autonome et incorpore : une source d'alimentation électrique (26) ; des moyens (34,38) provoquant l'émission par la source de lumière (30) d'impulsions lumineuses à intervalles de temps déterminés par une base de temps (34) ; un circuit récepteur relié au capteur (32) et ayant un amplificateur (40), et des moyens de détection à seuil fournissant un signal de sortie calibré lorsque l'énergie reçue par le capteur dépasse une valeur déterminée ; et des moyens (46) alimentant le circuit récepteur (40,42,44) uniquement pendant des intervalles de temps correspondant aux durées d'émission d'impulsions lumineuses brèves par la source de lumière.

3. Pluviomètre selon la revendication 2, caractérisé en ce que le boîtier comprend un générateur (38) d'une séquence d'un nombre déterminé d'impulsions électriques brèves d'excitation de la source de lumière (30) à réponse à chaque signal reçu de la base de temps.

4. Pluviomètre selon la revendication 3, caractérisé en ce que les moyens de détection effectuent une détection synchrone des signaux fournis par le capteur.

5. Pluviomètre selon la revendication 2, 3 ou 4, caractérisé en ce que le circuit récepteur attaque un circuit (46) de comptage et d'accumulation qui maintient sur sa sortie un signal d'absence de colmatage pendant une période déterminée, par exemple une heure, lorsque le rapport entre le nombre de signaux de sortie calibrés effectivement reçus pendant la période précédente et le nombre maximum possible de signaux de sortie calibrés dépasse une valeur déterminée.

6. Pluviomètre selon la revendication 5, caractérisé en ce que ladite valeur déterminée est inférieure à 1/2.

7. Pluviomètre selon l'une quelconque des revendications 2 à 6, caractérisé en ce que la base de temps comporte un oscillateur (48) placé en cascade avec un diviseur fournissant des signaux auxdits intervalles de temps réguliers et attaquant un circuit retardateur fixant les intervalles de temps d'alimentation du circuit récepteur.

8. Pluviomètre selon l'une quelconque des revendications précédentes, caractérisé en ce que la source de lumière est constituée par une diode électro-luminescente émettant dans l'infra-rouge et en ce que le capteur est constitué par une photo-diode.

9. Pluviomètre selon l'une quelconque des revendications précédentes, caractérisé en ce que la source est placée sur une bague réceptrice (12) constituant la partie haute de l'entonnoir tandis que le capteur est placé au-dessous de l'ajutage et au-dessus d'un auget (20) de réception de l'eau s'écoulant par l'ajutage.

## Patentansprüche

1. Regenmesser, umfassend einen Aufnahmetrichter, der an seinem unterem Teil mit einem Wasserabflußstutzen (16) ausgerüstet ist, an dessen Mündung ein Filter (14) angeordnet ist, **dadurch gekennzeichnet, daß** er eine Vorrichtung zur Detektion einer Verstopfung des Filters aufweist, die umfaßt eine an der Trichtermündung angeordnete Lichtquelle (30), die so angeordnet ist, daß sie den Boden des Trichters oberhalb des Filters (14) beleuchtet, eine Meßzelle (32) für das Licht, das vom Boden des Trichters reflektiert und gestreut wird und das durch den Filter und den Stutzen hindurchgeht, wobei die Meßzelle unterhalb des Stutzens angeordnet und seitlich zu diesem versetzt ist, und eine mit der Quelle (30) verbundene elektronische Einrichtung (24), die die Aussendung von Lichtimpulsen in gleichmäßigen Zeitintervallen bewirkt und die Ausgangssignale der Meßzelle (32), die einen bestimmten Schwellenwert überschreiten, detektiert.

2. Regenmesser nach Anspruch 1, **dadurch gekennzeichnet,** **daß** die elektronische Einrichtung (24) netzunabhängig ist und umfaßt: eine Stromquelle (26), Vorrichtungen (34, 38) zur Erzeugung der Emission von Lichtimpulsen aus der Lichtquelle (30) mit Zeitintervallen, die durch einen Taktgeber (34) bestimmt werden, einen mit der Meßzelle (32) verbundenen Empfängerkreis, der einen Verstärker (40) und Vorrichtungen zur Schwellenwertdetektion aufweist, die ein geeichtes Ausgangssignal liefern, wenn die von der Meßzelle aufgenommene Energie einen bestimmten Wert überschreitet, und Vorrichtungen (46), die den Empfängerkreis (40, 42, 44) während der Zeitintervalle, die dem Zeitraum der Emission von kurzen Lichtimpulsen durch die Lichtquelle entsprechen, allein versorgen.

3. Regenmesser nach Anspruch 2, **dadurch gekennzeichnet,** **daß** die Einrichtung einen Generator (38) mit einer Folge einer bestimmten Anzahl von kurzen elektrischen Impulsen zur Anregung der Lichtquelle (30) als Reaktion auf jedes von dem Taktgeber empfangene Signal, umfaßt.

4. Regenmesser nach Anspruch 3, **dadurch gekennzeichnet,** **daß** die Detektionsvorrichtungen eine Synchrondetektion der von der Meßzelle gelieferten Signale durchführen.

5. Regenmesser nach Anspruch 2, 3 oder 4, **dadurch gekenn****zeichnet, daß** der Empfängerkreis einen Zähl- und Summierkreis (46) steuert, der an seinem Ausgangs während eines bestimmten Zeitraums, z.B. einer Stunde, ein Signal aufrechterhält, das die Abwesenheit von Verstopfungen anzeigt, wenn die Beziehung zwischen der Anzahl der geeichten Ausgangssignale, die während des vorhergehenden Zeitraums wirksam aufgenommen wurden, und der maximal möglichen Anzahl der geeichten Ausgangssignale einen bestimmten Wert überschreitet.

6. Regenmesser nach Anspruch 5, **dadurch gekennzeichnet,** **daß** der bestimmte Wert unter 1/2 liegt.

7. Regenmesser nach einem der Ansprüche 2 bis 6, **dadurch** **gekennzeichnet, daß** der Taktgeber einen Oszillator (48) enthält, der in Kaskade mit einem Teiler angeordnet ist, der Signale in gleichmäßigen Zeitintervallen liefert und einen Verzögerungskreis steuert, der die Zeitintervalle zur Versorgung des Empfängerkreises festlegt.

8. Regenmesser nach einem der vorhergehenden Ansprüche, **dadurch gekennzeichnet, daß** die Lichtquelle aus einer Elektroluminiszenzdiode besteht, die im Infraroten emittiert, und daß die Meßzelle aus einer Fotodiode besteht.

9. Regenmesser nach einem der vorhergehenden Ansprüchen, **dadurch gekennzeichnet, daß** die Quelle unter einem Aufnahmerohr (12), das den oberen Teil des Trichters darstellt, angeordnet ist, während die Meßzelle unterhalb des Stutzens und oberhalb eines Behälters (20) für die Aufnahme des durch den Stutzen fließenden Wassers angeordnet ist.

## Claims

1. A rain gauge including: a reception funnel having a water discharge nozzle (16) located at the lower part thereof and at the inlet of the nozzle,
characterized in that it comprises a device for detecting clogging of the filter, having a light source (30) disposed at the inlet of the funnel, placed so as to illuminate the bottom of the funnel, above the filter (14), a sensor (32) for detecting light reflected and diffused by the bottom of the funnel and passed through the filter and nozzle, said sensor being placed below the nozzle and being offset laterally with respect thereto; and an electronic unit (24) connected to the source (30) for causing the source to emit light pulses at regular time intervals and for detecting those output signals of the sensor (32) which exceed a predetermined threshold.

2. Rain gauge according to claim 1, characterized in that the electronic unit is self-sufficient and comprises: an electric supply source (26); means (34,38) for causing the light source (30) to emit light pulses at time regular intervals which are determined by a time base (34); receiver means connected to the sensor (32) and having an amplifier (40) and threshold detection means delivering a calibrated output signal when an amount of energy received by the sensor exceeds a predetermined threshold; and means (40) for only energizing the receiving circuit (40,42,44) during time intervals corresponding to time durations of short light pulses from the light.

3. Rain gauge according to claim 2, characterized in that the unit comprises a generator (38) for delivering a sequence consisting of a predetermined number of short electric signals for energizing the light source (30) responsive to each signal received from said time base.

4. Rain gauge according to claim 3, characterized in that the detection means are for synchronous detection of the signals delivered by the sensor.

5. Rain gauge according to claim 2, 3 or 4, characterized in that the receiving circuit drives a counting and accumulation circuit (46) which maintains a signal indicating absence of clogging on the output thereof for a predetermined time period, for instance one hour, when the ratio between the number of calibrated output signals actually received during the preceding period and the maximum possible number of calibrated output signals exceeds a predetermined value.

6. Rain gauge according to claim 5, characterized in that said predetermined value is lower than 1/2.

7. Rain gauge according to any one of claims 2-6, characterized in that the time base comprises an oscillator (48) cascaded with a divider delivering signals at said regularly distributed time intervals and driving a delay circuit which defines the time intervals during which the receiver circuit is energized.

8. Rain gauge according to any preceding claim, characterized in that the light source is an infrared light emitting diode and the sensor is a photodiode.

9. Rain gauge according to any preceding claim, characterized in that the source is located on a receiver ring (12) constituting an upper portion of the funnel while the sensor is located at a level lower than that of the nozzle and above a receptacle (20) for receiving water flowing through the nozzle.
